(19) **Europäisches Patentamt / European Patent Office / Office européen des brevets**

(11) **EP 1 519 898 B1**

(12) **EUROPEAN PATENT SPECIFICATION**

(45) Date of publication and mention
of the grant of the patent:
**29.02.2012 Bulletin 2012/09**

(21) Application number: **03735321.6**

(22) Date of filing: **25.06.2003**

(51) Int Cl.:
***C01G 23/04*** *(2006.01)*

(86) International application number:
**PCT/DK2003/000439**

(87) International publication number:
**WO 2004/001278 (31.12.2003 Gazette 2004/01)**

(54) **METHOD FOR PRODUCTION OF A PRODUCT HAVING SUB-MICRON PRIMARY PARTICLE SIZE AND APPARATUS FOR PERFORMING THE METHOD**

VERFAHREN ZUR HERSTELLUNG EINES PRODUKTES MIT SUB-MICRONER PRIMÄR-TEILCHENGRÖSSE UND APPARAT ZUR ANWENDUNG DES VERFAHRENS

PROCEDE DE PRODUCTION D'UN PRODUIT A GRANULOMETRIE PRIMAIRE SUBMICRONIQUE ET APPAREIL UTILISE DANS CE PROCEDE

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.06.2002 DK 200200975**

(43) Date of publication of application:
**06.04.2005 Bulletin 2005/14**

(73) Proprietor: **Aalborg Universitet**
**9220 Aalborg (DK)**

(72) Inventors:
• **JENSEN, Henrik**
**DK2000 Fredriksberg (DK)**
• **S GAARD, Erik, Gydesen**
**DK-6700 Esbjerg (DK)**

(74) Representative: **Plougmann & Vingtoft A/S**
**Sundkrogsgade 9**
**P.O. Box 831**
**2100 Copenhagen Ø (DK)**

(56) References cited:
**US-A1- 2002 104 599     US-B1- 6 387 341**

• **DATABASE WPI Section Ch, Week 200341 Derwent Publications Ltd., London, GB; Class E33, AN 2003-431452 XP002265725 & CN 1 401 575 A (BIOLOMIC ENVIRONMENT RES CENT CHINESE AC), 12 March 2003 (2003-03-12)**
• **TADAO SUGIMOTO ET AL: "Synthesis of uniform anatase TiO2 nanoparticles by gel-sol method: 3. Formation process and size control" JOURNAL OF COLLOID AND INTERFACE SCIENCE, vol. 259, no. 1, 1 March 2003 (2003-03-01), pages 43-52, XP002265730**

**Description**

**BACKGROUND OF THE INVENTION**

The purpose of producing metal oxides, metaloxy hydroxides, or metal hydroxides by using a sol-gel process is that these processes are simple low-cost processes, taking place at low temperatures. In these processes, it is possible to vary the production parameters, thereby obtaining a variety of product properties [Moran et al., 1999].

By producing metal oxides, metaloxy hydroxides, or metal hydroxides in a traditional sol-gel process [Livage et al., 1998] an amorphous product is obtained with a finite particle size of 1 $\mu$m to 10 $\mu$m. In the traditional sol-gel process, it is necessary to calcine the product at high temperatures for up to 24 hours in order to obtain a crystalline product. In addition to a higher energy-usage, this has the unfortunate effect within, for example catalysis applications, that the specific surface area is decreased by up to 80% [Andersen, 1975].

By using supercritical fluids as solvents in the sol-gel processes rather than the traditional alcohols, a significantly lower particle size in the nanometer range can be obtained. This is believed to be due to the higher reaction rate obtained in supercritical media [Jung & Perrut, 2001].

Over the last decades the synthesis of ceramics and metal oxides in supercritical media fluids (for example supercritical $CO_2$) has been further developed so as to improve upon the particle characteristics, for example in terms of chemical homogeneity and structure and morphology [Jung & Perrut, 2001].

The lowest temperature at which particulate material of the anatase phase of $TiO_2$ has been produced in the prior art is 250°C [Robbe et al. 2003]. This result, however, is obtained by first producing an amorphous $TiO_2$ under supercritical conditions and then calcining the amorphous product at 250°C.

The above mentioned process for producing the anatase phase at 250°C is based on US patent 6,387,341 [Sarrade et al., 2002], which describes the production of metal oxides and silicon oxides in a supercritical process. This process differs from the present invention in that it only yields amorphous oxides, which in order to become crystalline needs further calcination. These oxides have a particle size of 100 nm to 1000 nm.

A continuous supercritical production process [Reverchon et al. 2002] also results in amorphous nano-sized Titanium Hydroxide particles.

[Sievers and Karst, 1997] also describe a method for the supercritical production of 100nm to 650 nm amorphous particles.

Yet another method for producing nano-sized metal oxides, metaloxy hydroxides, or metal hydroxides is by applying supercritical drying, where an already produced powder is inserted into a chamber, where it is dried in supercritical conditions by for example supercritical $CO_2$. This process is described in [Yamanis, 1989], where different metal oxides are subjected to post-production supercritical drying, resulting in the obtainment of very large specific surface areas. This method also allows for the production of crystalline products without reducing the specific surface, as shown in [Yoda et al. 2001]. Yoda et al. demonstrate that the supercritical drying can increase the specific surface area of $TiO_2$ and $SiO_2$ up to values of 700 -900m2/g.

Commercial crystalline $TiO_2$ is mainly made by flame oxidation synthesis of TiCl4 in a H2/O2 flame. An example of this is the commercially available Degussa P25 (Degussa GmbH, Germany) which has a particle size of ~ 35 nm and consists of a mixture of rutile phase and anatase phase of $TiO_2$. Compared to the sol-gel process, it is difficult to vary the process parameters and thus the result, in flame oxidation synthesis [Brinker 1990]. In addition, it is not possible to produce a pure anatase phase, as it is less stable than the rutile phase. Flame synthesis is also used to produce, for example, silicon dioxide, alumina, and zirconium dioxide [Brinker, 1990]

APPLICATIONS

As the above prior art suggests, nanoparticles, amorphous and crystalline, have received tremendous interest in recent years. This interest is spurred by the observation that many properties of materials are radically altered with the inclusion of various forms of nanoparticles. Owing to the small volumes and the large surface-to-volume ratio, both electronic and physical characteristics of the materials can be strongly affected. For some characteristics it is important that the nanoparticle is amorphous, for others, that it has a certain crystalline phase.

An incomplete list of applications, in which metal-oxide nanoparticles can yield significant performance improvements is:

Chemical-mechanical polishing, Electroconductive coatings, Magnetic Fluid Seals, Magnetic recording media, multilayer ceramic capacitors, optical fibres, phosphors, quantum optical devices, solar cell, antimicrobials, biodetection, biomagnetic separations, MRI contrast agents, orthopedics, sunscreens, automotive catalysts, ceramic membranes, fuel cells, photo catalyst, propellants, scratch-resistant coatings, structural ceramics and thermal spray coatings.

Integration of metal oxide nanoparticles in some of these applications is already taking place at the industrial scale. However, for many applications the cost of nanoparticles is prohibitive, severely limiting the number of applications which can benefit. The general trend is for prices to rise as the size of the nanoparticles becomes smaller. Unfortunately it is also a general trend, that it is the smaller nanoparticles that yield the largest improvement in performance.

## BRIEF DESCRIPTION OF THE INVENTION

It may be an object of the invention to produce metal-oxide nanoparticles, by a method in which the total energy budget is minimised thereby reducing appreciably the cost of the final product.

It may furthermore be an object of the invention to produce metal-oxide nanoparticles, by a method capable of inexpensively yielding very small nanoparticles that normally have a particular high price.

It may also be an object of the invention to produce metal-oxide nanoparticles, in which particle size, crystal phase, and degree of crystallinity can be controlled by external parameters without having to resort to costly post-reaction processing.

In a first aspect, one or more of these and possible other object are achieved by a method of manufacturing a metal oxide, metal oxyhydroxide or metal hydroxide product, said product having a sub-micron primary particle size, comprising the steps of:

-    introducing a solid reactor filling material in a reactor,
-    introducing a metal-containing precursor in said reactor,
-    introducing a co-solvent into the said reactor,
-    introducing a supercritical solvent into the said reactor,
-    establishing a contact between the metal-containing precursor and the co-solvent, thus
-    resulting in the formation of said product in the proximity of the said solid reactor filling material.

In the context of the present application, the primary particles are the nano- or at least sub-micron particles that result from the formation. Usually these primary particles are relative weakly bounded together in aggregates of particles. These aggregates can be considered as secondary particles. The scale of said proximity can be any scale ranging from an atomic level, a nano level, a micron level up to a macroscopic level.

Preferably, the formation takes place by a process involving a sol-gel reaction. The product obtained may either be substantially crystalline and substantially amorphous. In general, it may also be a combination of several different phases.

The method can be applied such that the introduction of the solid reactor filling material, the metal-containing precursor, the co-solvent, and the supercritical solvent into the said reactor mayis done in any arbitrary order for easy and fast manufacturing.

Additionally, one of components: the solid reactor filling material, the metal-containing precursor, the co-solvent or the supercritical solvent, maymay be mixed with any of the other components before introduction into the reactor. Furthermore, the method may be applied in a mode selected from the group of: batch mode, quasi-batch mode and continuos mode. This will be further elaborated in the detailed description.

The temperature in the reactor during the formation of said product is possibly kept at a fixed temperature, but canmay also be performed at an increasing or a decreasing temperature, preferably with respect for the supercritical conditions to be fulfilled. Even alternatively, the temperature in the reactor may have a temperature profile consisting in an arbitrary selection of one or more fixed temperatures, one or more increasing temperatures and one or more decreasing temperature.

The temperature in the reactor during the formation of the product is preferably maximum 400°C, more preferably maximum 300°C, even more preferably maximum 200°C, most preferably maximum 100°C, and even and most preferably maximum 50°C.

The pressure in the reactor during the formation of said product is possibly kept at a fixed pressure, but canmay also be performed at an increasing or decreasing pressure, preferably, with respect for the supercritical conditions to be fulfilled. Even alternatively, the pressure in the reactor may have a pressure profile consisting in an arbitrary selection of one or more fixed pressures, one or more increasing pressures and one or more decreasing pressures.

Using carbon dioxide, as supercritical solvent the pressure in the reactor during the formation of the product should be as minimum 74 bar and the temperature in the reactor a minimum of 31°C. If one uses isopropanol as supercritical solvent, the pressure in the reactor during the formation of the product should be as minimum 47 bar and the temperature in the reactor a minimum of 235°C.

The supercritical solvent may be supercritical before the introduction into the reactor or brought into a supercritical phase after the introduction into the reactor.

The present invention offers the astonishing possible, by means of a dedicated selection of the above process parameters, of producing anatase phase of $TiO_2$ already at temperatures as low as between 50°C and 100°C and at concurrent pressures of 100-200 bar.

The time of the formation of the product span the gap from maximum 0,5 hour to maximum 24 hours, depending on the number of process parameters, the number of process components and the one or more products for being produced by the process.

Preferably, a plurality of different metal-containing precursors may be introduced into the reactor opening up for a broader variety of alloys and possible doping of the product.

The metal-containing precursor may for example be a metal alkoxide, such as titanium tetraisopropoxide, titanium butoxide, titanium ethoxide, titanium methoxide, aluminium isopropoxide, aluminium-sec-butoxide, or magnesium ethoxide.

The metal-containing precursor canmay be a metal salt, such as $Ti(SO_4)_2$, $TiCl_4$ or $AlCl_3$.

Preferably, the co-solvent is selected from the group of: water, ethanol, methanol, hydrogenperoxid and isopropanol, but a plurality of different co-solvents may also be introduced in the reactor.

The solid reactor filling material may function as a heterogeneous catalyst, preferably with a promoter.

The solid reactor filling material may have various different forms, such as one or several fibres, a powder, and a substantially porous structure.

The solid reactor filling material may also have a size and shape capable of substantially confining the metal-containing precursor to a limited part of the reactor. For example in form of a wad of fibres in top of the reactor confining the precursor to the top of the reactor, thereby separating the metal-containing precursor from the rest the reactor, e.g. a liquid in the bottom of the reactor. Alternatively, the solid reactor filling material has the shape from the group of a sponge, a grid, and a sheet.

The solid reactor filling material may comprise a polymer, such as polystyrene (PS), polypropylene (PP), polyethylene (PE), polyvinyl chloride (PVC), polyvinylidene chloride (PVDC), or polyvinyl acetate (PVAc).

Alternatively, the polymer is from the group of: acrylic polymer, fluorinated polymer, diene polymer, vinyl copolymer, polyamide polymer, polyester polymer, polyether polymer, or polyimide polymer.

The solid reactor filling material may also comprise a metal, such as titanium, aluminium, zinc, vanadium, magnesium, zirconium, chromium, molybdenum, niobium, tungsten, copper, or iron.

The solid reactor filling material may comprise a metal oxide, such as titanium oxide, zinc oxide, copper oxide, aluminium oxide, vanadium oxide, magnesium oxide, zirconium oxide, chromium oxide, silicium oxide, molybdenum oxide, niobium oxide, tungsten oxide, or iron oxide.

Preferably, the solid reactor filling material may comprise a ceramic, either natural or artifical. Possibly, the solid reactor filling material comprises a metal sulphate or a metal halide.

The solid reactor filling material may function as seed material for the formation of the product. Preferably, the solid reactor filling material comprises a metal oxide, metal oxyhydroxide or metal hydroxide identical to the product resulting from the formation in the reactor in order to initiate the formation of the product. The formation may for example also be by precipitation, catalysis, or growth. Alternatively, the solid reactor filling material functions as a collecting agent for the product.

The product is preferably separable from the solid reactor filling material with no further treatments of the solid reactor filling material. In this manner, the solid reactor filling material substantially does not degrade. Preferably, this allows the solid reactor filling material to be re-used as solid reactor filling material in a new formation step. The separation from the solid reactor filling material may take place by flushing the solid reactor filling material in a fluid, by jolting, by vacuum means, by blowing means, or by ultrasonic means.

In comparison with known solutions in the art, e. g, exploiting nanostructured templates, the present invention is characterised by the fact that the sub-micron product is readily separable from the reactor filling material without the need for plasma treatments, calcination or further chemical processing of the reactor filling material. Using e.g. nanostructured templates causes the product to be embedded within the template which necessitates a separation step that degrades the template. This is not the case with the present invention.

A third aspect of the invention concerns an apparatus for manufacturing a metal oxide, metal oxyhydroxide or metal hydroxide product, said product having a sub-micron primary particle size, comprising the following components:

- means for introducing a solid reactor filling material in a reactor,
- means for introducing a metal-containing precursor in said reactor,
- means for introducing a co-solvent into the said reactor,
- means for introducing a supercritical solvent into the said reactor,
- said reactor intended as a space for establishing a contact between the metal-containing precursor and the co-solvent and
- said reactor intended as a space for the formation of said product in the proximity of the said solid reactor filling material.

## BRIEF DESCRIPTION OF THE FIGURES

The invention is herafter described with reference to the following figures where

Figure 1 is a schematic illustration of the traditional sol-gel process where the particle size is a function of the reaction time after [Soloviev, 2000],

Figure 2 is a schematic drawing showing the generalized facility used in the supercritical sol-gel process according to the invention,

Figure 3 shows the crystalline phases of $TiO_2$, respectively brookite, anatase and rutile, as a function of crystal phase formation temperature,

Figure 4 is a combined x-ray diffraction spectrum of the produced anatase $TiO_2$ powder and the expected location of anatase diffraction peaks,

Figure 5 shows the density of $CO_2$, having a low density at normal conditions, as a function of reduced pressure,

Figure 6 is an x-ray diffraction spectrum of a 50/50 weight ratio $TiO_2$ and CaF2 used to determine the crystallinity of the titanium dioxide powder as well as the crystallite size,

Figure 7 is a small-angle x-ray spectrum of an $Al_2O_3$ product produced by the present invention, used to determine the size of the primary particles,

Figure 8 is an x-ray diffraction spectrum of a 50/50 weight ratio $TiO_2$ (as produced by the present invention) and $CaF_2$ used to determine the crystallinity of the titanium dioxide powder as well as the crystallite size,

Figure 9 is an x-ray diffraction spectrum of $Al_2O_3$ product produced according to the present invention showing clear diffraction peaks from the crystal structure termed Boehmite.

## DETAILED DESCRIPTION OF THE INVENTION

The invention, resulting in the production of nano-sized metal oxides, metaloxy hydroxides, or metal hydroxides, preferably makes use of a sol-gel process, in which a precursor of a metal alkoxide or a metal salt is used. In the case of producing $TiO_2$ a precursor of a metal alkoxide may be e.g. titanium tetraisopropoxide, $Ti(OPr^1)_4$, titaniumbutoxide, $Ti(OBu)_4$, titaniumethoxide, $Ti(OEt)_4$, titaniummethoxide $Ti(OMe)_4$, or precursor of a metal salts may be e.g. $TiCl_4$, $Ti(SO_4)_2$.

The sol-gel process starts with the hydrolysis of the precursor, when it comes into contact with water. The hydrolysis continues simultaneously with the condensation of the hydrolyzed monomers leading to formation of nano-sized particles. The overall process can generally be expressed as follows [Livage et al., 1988]:

$$M(OR)_n + \tfrac{1}{2}nH_2O \rightarrow MO_{\frac{1}{2}n} + nROH$$

As an example, the total hydrolysis/condensation reaction can for the case of $TiO_2$ formation be expressed as

$$Ti(OR)_4 + 2H_2O \rightarrow TiO_2 + 4ROH$$

The process must be controlled to obtain a desired structure and size of the final product. The colloid solution starts out as a sol. If the sol is stable, the solution will remain unchanged. Often, however, a gelation or precipitation of particulate material takes place. Regardless of whether a sol, a gel, or a precipitate is formed, the product will, in the traditional sol-gel process, be dried and often calcined to obtain the final product.

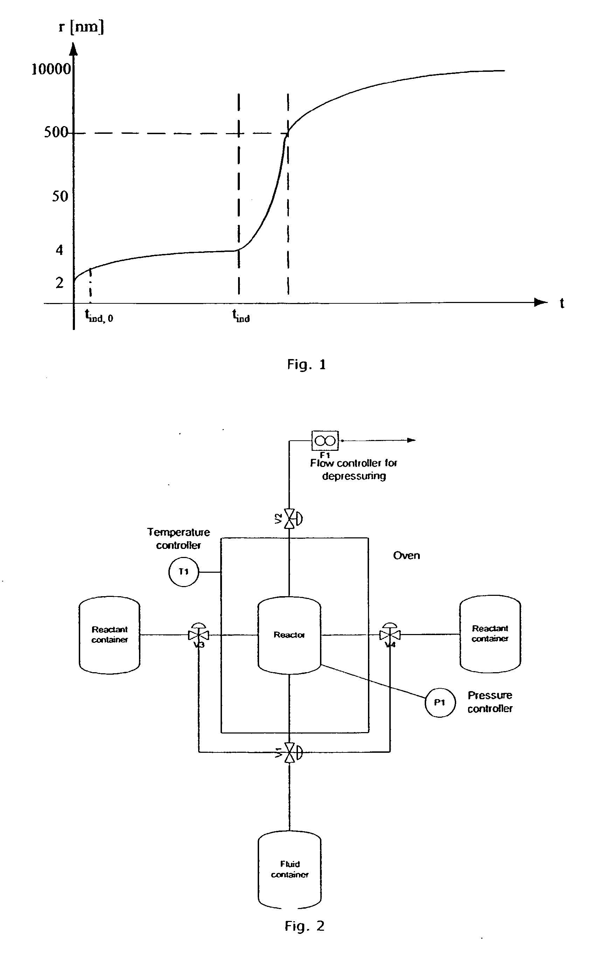

A schematic illustration of the development of the particle size as a function of the reaction time can be seen in Figure 1. It is seen that in the traditional sol-gel process a final particle size of 1-10 $\mu$m is obtained [Soloviev, 2000].

Utilizing a supercritical solvent (e.g. $CO_2$) can arrest the process shown in Figure 1. The supercritical solvent makes it possible to control and stabilize the particles such that the particle growth is arrested before the steep part of the curve (in Figure 1) is reached, consequently resulting in nano-sized particles. By producing the particles in a supercritical fluid at specified process parameters and including a reactor material acting as seed or catalyst according to the present invention, it is furthermore possible to obtain partially or wholly crystalline products at relatively low temperatures.

A supercritical fluid is used as a solvent in this process. A supercritical fluid is defined as a fluid, a mixture or an element, in a state in which the pressure is above the critical pressure ($p_c$) and the temperature is above the critical temperature ($T_c$). The critical parameters for selected fluids are shown in Table 1.

Table 1. Critical parameters for select inorganic and organic fluids [Jessop et al. 1999]

| Inorganic Media | $T_c$ [°C] | $p_c$ [bar] | $d_c$ [g/ml] |
|---|---|---|---|
| Ar | -122.5 | 48.6 | 0.531 |
| $CO_2$ | 31.1 | 73.8 | 0.466 |
| $H_2O$ | 374.0 | 220.6 | 0.322 |
| $SF_6$ | 45.5 | 37.6 | 0.737 |
| Organic Media | $T_c$ [°C] | $p_c$ [bar] | $d_c$ [g/ml] |
| Methane | -82.6 | 46.0 | 0.163 |
| Ethane | 32.2 | 48.7 | 0.207 |
| Propane | 96.7 | 42.5 | 0.220 |
| Hexane | 289.5 | 49.2 | 0.300 |
| Isopropanol | 235.3 | 47.0 | 0.273 |
| Ethanol | 243.0 | 63.0 | 0.276 |

The characteristics of a supercritical fluid are often described as a combination of the characteristics of gasses and those of liquids. As such, the supercritical fluid has the viscosity of a gas and the density of a liquid. This makes them ideal as solvents in chemical reactions. A comparison of these physical characteristics is shown in Table 2.

Table 2 General comparison of physical characteristics [Jessop et al., 1999]

| Characteristic | Gas | Supercritical Fluid | Liquid |
|---|---|---|---|
| Density [g/ml] | $10^{-3}$ | 0,3 | 1 |
| Viscosity [Pa·s] | $10^{-5}$ | $10^{-4}$ | $10^{-3}$ |

Due to the high density and the low viscosity the supercritical fluids are ideal for obtaining high reaction rates as well as stabilizing and controlling the sol-gel process. This results in the possibility of arresting the sol-gel process in Figure 1 and stabilizing the particles at a size in the nano-regime of roughly 1-100 nm.

To enable the production and collection of nano-sized particles, a solid reactor filling material is introduced in the production. These filling materials can act both as seed or catalyst as well as a reservoir for collecting the nano particles. Examples of different filling material are polymers, ceramics, metal fibres, and natural materials. The filling materials can be coated and thereby have different surface properties such as hydrophilic or hydrophobic surfaces. It is believed that the reactor filling material is especially helpful in facilitating the formation of crystalline phases at low temperatures.

Equipment and Preparation

A generalized sketch of the equipment used to obtain the sub-micron product is shown in Figure 2. Central to this equipment is the reactor in which the product is formed under supercritical conditions. The reactor is in general constructed such that both the temperature and the pressure can be controlled.

Both the metal containing precursor, the co-solvent, the solvent and the reactor filling material are introduced into the reaction chamber. The exact order of introduction and circumstances under which these are introduced may vary substantially.

For example in one production route, which is considered to be an example of a pure batch route, the metal containing precursor, the co-solvent, and the reactor filling material may be introduced into the reaction chamber at room temperature and room pressure, albeit separated in some fashion so as to not start the hydrolysis. Once the reaction chamber is closed, the temperature and the pressure can be raised to the supercritical level by either first raising the temperature, or raising the pressure or by some more complicated combination of the two. Raising the pressure may for example be performed as a direct result of introducing the solvent, in sufficiently large quantities.

In any combination of raising the temperature and the pressure, it is paramount that supercritical conditions are reached quickly. The solvent will transport the metal containing precursor and the co-solvent until they come into contact with each other, at which time hydrolysis will commence. After some time the chamber can be depressurized, cooled and opened such that the reactor-filling material and the product which is located in proximity to the reactor filling material can be removed from the reactor.

In another example, which considered to be an example of a quasi-batch process, some of the components may be introduced into the reaction chamber at room temperature and room pressure. For example, the reactor filling material and the metal-containing precursor, may be introduced at room temperature and room pressure. In such a quasi-batch process, the temperature and the pressure may be raised in arbitrary order, or perhaps following any number of more complicated temperature pressure routes. As in the above batch process the rise in pressure may happen as a direct result of the introduction of the solvent or by any other means available in the prior art. To start the hydrolysis, it is necessary to introduce the co-solvent. This can be performed simultaneously with the introduction of the solvent, perhaps even mixing the solvent and co-solvent before introduction into the reaction chamber.

Alternatively, the introduction of the co-solvent can be performed well after the introduction of the solvent and well into the supercritical conditions. In this case the rate of hydrolysis can be controlled by the rate of co-solvent introduction into the reaction chamber. It is of course completely natural to rather consider the introduction of the reactor filling material and the co-solvent at room temperature and pressure and to consider the later introduction of the metal-containing precursor and the solvent. One may also as a further extension of the semi-batch process consider only the reactor filling material to be placed in the reactor chamber in room temperature and room pressure conditions, and for the solvent, co-solvent and metal-containing precursor to be added subsequently in preferably advantageous order and rates. After some time, the chamber can be depressurized, cooled and opened such that the reactor-filling material and the product can be removed from the reactor.

Finally, a continuous process is envisioned in which the reaction chamber is continuously (or for very long times) maintained at supercritical temperature and pressure. In such a system the introduction and extraction of reactor filling material may be continuous, or quasi-continuous as for example if a load lock system capable of introducing and removing the reactor filling material to and from the reaction chamber, while in supercritical conditions, was available.

Such a load lock system may function by introducing the reactor filling material into the load lock, closing the load lock, bringing the load lock area to conditions comparable to those in the reaction chamber, opening a valve between the reaction chamber and the load lock, introducing the reactor filling material into the reaction chamber, letting the reaction take place with the resulting product formed in proximity to reaction filling material, removing the reactor filling material from the reaction chamber into the load-lock, closing off the reaction chamber from the load lock, reducing pressure and temperature in the load lock, removing the reactor filling material (and the thereby the product) from the load-lock and subsequently taking steps to remove the product from the reactor filling materials by one or more of the means above. With two such load lock systems, production may be almost continuous by utilizing alternating load lock to introduce the reactor filling material.

In the continuous process the introduction of respectively metal-containing precursor, co-solvent and solvent can take place in any number of imaginable combinations of rates and routes to ensure the desired product characteristics.

In all of the above processing routes, one ends up with the product in proximity to the reactor filling material. In contrast to the prior art the process for separating the product from the fibre does not require a temperature treatment. In most cases it requires a simple mechanical or dynamic manipulation to separate the product from the filling material. Examples of such manipulations can be flushing in a liquid, rubbing, shaking, vibrating, jolting, sucking e.g. use of vacuum, ultrasonically agitating etc.

It is a key feature of the invention and a prerequisite for obtaining reproducible results that the chemical sol-gel process takes place in a supercritical environment. It is assumed that the reaction in the supercritical environment together with the presence of reactor fill that enables the production of, for example, the meta-stable anatase phase $TiO_2$ at low temperatures without the need for after treatment.

Production Parameters and Associated effects

By changing the process parameters it is possible to vary the characteristics of the product. In the following table various process parameters and their influence on the end product is listed.

Table 3. The influence of process parameters on the final product.

| Process Parameter | Effect |
|---|---|
| Temperature | Crystalline phase and density |
| Pressure | Density |
| Reactant concentration | Particle Size |
| Amount of $CO_2$ | Crystallinity |

(continued)

| Process Parameter | Effect |
|---|---|
| Reactor fill | Particle size and crystallinity |
| Additional supercritical drying | Crystallinity and surface area |

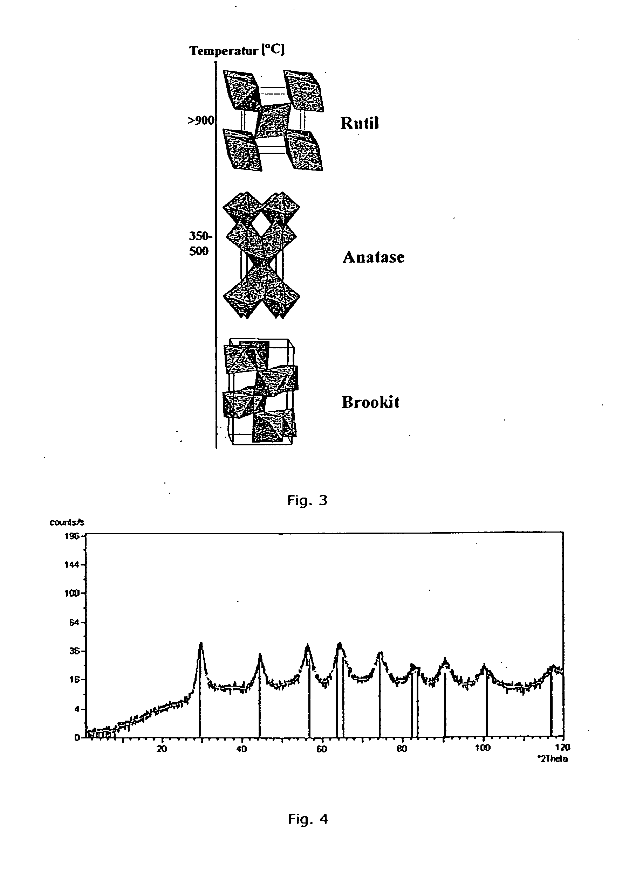

It is seen in Table 3 that by changing the temperature, it is possible to vary the crystalline phases. The lowest possible process temperature would be the temperature required to obtain a supercritical state, which for $CO_2$ as the supercritical fluid is, 31.1°C. Temperature has a significant influence on which phase of for example $TiO_2$ is produced. In Figure 3 the crystalline phases of $TiO_2$ is shown as a function of temperature. It is seen that the commercially important phases of $TiO_2$ (anatase and rutile) normally are obtained at temperatures of respectively 350 -500°C and over 900°C [Stojanovic et al., 2000].

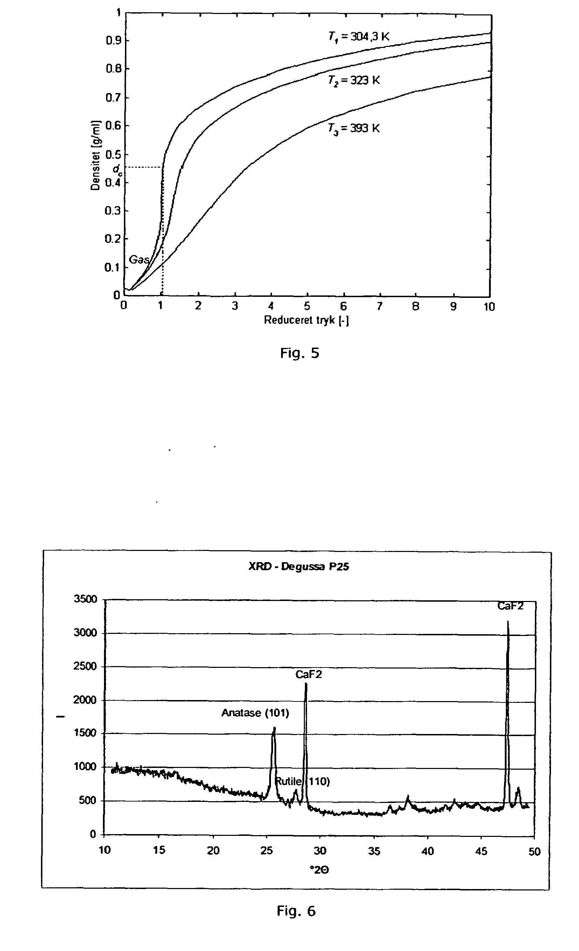

The pressure can also be varied, as long as the pressure is kept above the critical pressure that for $CO_2$ is 73.8 bar. By changing the pressure and temperature it is possible to change the characteristics of the solution, in terms of density. The solvent density can have a great influence on the stability of a colloidal suspension as well as on the solubility parameters for the materials in the solution. From Figure 5 it is seen that $CO_2$ has a low density at normal conditions (20°C and 1 bar), where $CO_2$ is a gas. Furthermore, it is seen that a significant increase in density is obtained near the critical pressure. Thus it is possible to fine-tune these parameters in order to obtain an optimal production environment.

In addition to changing the process parameters, the product can also be subjected to supercritical drying after the normal production process has taken place. Drying is done by opening valve V2 while stiil supplying the supercritical solvent fluid through value V1 at a given flow (F1) in a given time. The additional supercritical drying is expected to have an effect on the crystallinity as well as on the specific surface area.

CHARACTERIZATION OF NANO PARTICLES

A solid can be considered as crystalline from a theoretical point of view if a Bravais lattice can describe the structure of the solid. The crystallinity of the product produced by the present method is determined by x-ray powder diffraction patterns (XRD). The patterns can be recorded by any number of standard commercial diffractometers, but were in the present case recorded using a CuK$\alpha$ radiation ($\lambda$ = 1.540 A) from a STOE transmission diffractometer. The x-ray diffraction patterns are measured over a range of angles, which for the present case ranged from $2\Theta = 10°$ to $2\Theta = 50°$ for $TiO_2$ samples and from $2\Theta = 10°$ to $2\Theta = 80°$ for AlOOH samples.

The crystallinity, as used in this document, is defined with respect to a 100 % reference sample, $CaF_2$, and the crystallinity is defined as being the background subtracted area of the 100 % peak of the sample with unknown crystallinity divided by the background subtracted area of the 100 % peak of the 100 % crystalline $CaF_2$. The crystallinity ratio is compared to table values of the ratio between the respective peaks for a 100 % crystalline sample and $CaF_2$. The sample with unknown crystallinity and $CaF_2$ are mixed with a weight ratio of 50 %.

It is in the following shown how the crystallinity of a $TiO_2$ sample is determined. The ratio between the background subtracted area of the 100 % peak for anatase (101) and corundum in a 50 % weight ratio is:

$$\frac{A_{Anatase,101}}{A_{Corundum}} = 5.00$$

And the ratio between the 100 % peak of $CaF_2$ and corundum in a 50 % weight ratio is:

$$\frac{A_{CaF_2,220}}{A_{Corundum}} = 4.00$$

This gives a ratio between 100 % crystalline anatase and $CaF_2$ in a 50 % weight ratio is:

$$\frac{A_{Anatase,101}}{A_{CaF2,220}} = 1.25$$

This method can be demonstrated for Degussa P25 from Degussa GmbH, Germany, which is a commercial

TiO$_2$ powder prepared by the flame oxidation synthesis and consists of both the anatase phase as well as the rutile phase. The ratio between rutile (110) and CaF$_2$ is 0.85.

The sample is mixed in a weight ratio of 50% with CaF$_2$. The diffraction pattern for the determination of the crystallinity of Degussa P25 is shown in Figure 6. As shown on Figure 6 Degussa consists of both the anatase as well as the rutile phase of TiO$_2$. By analyzing the measured spectra from Degussa P25 powder and calculating the area of the peaks gives a fraction of 71 % crystalline anatase phase and 27 % crystalline rutile phase while the remaining 2 % is an amorphous fraction. This is in agreement with [Pozzo et al., 2002] who have measured the Degussa P25 powder to consist of 75 % anatase and 25 % rutile and [Porter et al., 1999] who got 76.5 % anatase and 23.5 % rutile. [Porter et al., 1999] also report about an amorphous fraction in the Degussa P25 powder.

The x-ray powder diffraction patterns are also used to determine the crystallite size, r, or primary particle size of the sample from Scherer's formula [Jenkins et al., 1996]:

$$\tau = \frac{K \cdot \lambda}{\beta_r \cdot \cos\theta}$$

Where:

K = Form factor = 0.9
$\beta_\tau$ = Width of the peak at half the maximum intensity subtracted from instrumental noise
$\Theta$ = Diffraction angle

The crystallite size of Degussa P25 for the (101) peak is 35 nm.

The size of the primary particles, which can be different than the size of the crystallites determined above, can be determined by scanning electron microscopy (SEM) and Small-Angle X-ray Scattering (SAXS).

The SAXS data can be obtained using any number of commercial or home-built systems, but in the present case was obtained using an adaptation of a Brukers AXS, Nanostar SAXS system, with a rotating anode x-ray generator, Cross-coupled Goebel mirrors and a Bruker AXS Hi-star Area Detector.

The scattering intensity, I, was measured in terms of the scattering vector modulus $q = 4n\sin(\Theta)/\lambda$, where $\lambda = 1.54$ Å. The scattering intensity was measured from $q = 0.0071$ Å$^{-1}$ to $q = 0.334$ Å$^{-1}$. The data was corrected for background and azimuthally averaged to obtain a spectrum of average intensity vs. q. The data was then analyzed by fitting to the Beaucage model [Beaucage and Schaefer, 1994]:

$$\frac{I(q)}{I_0} = G \cdot \exp\left(\frac{-q^2 \cdot R_g^2}{3}\right) + B \cdot \left[\left(erf\left(\frac{q \cdot R_g}{\sqrt{6}}\right)^3\right)\Big/q\right]^P$$

Where:

R$_g$: Radius of gyration
P: Mass fractal dimension
B: Pre-factor specific to the type of power-law scattering, specified by the regime in which the exponent P, falls
G: Classic Guinier pre-factor

The Beaucage model gives information of the size of the primary particle through the radius of gyration. The radius of gyration is defined as the weight average radius of the particles. In difference from XRD data SAXS can determine the size of primary particles of both crystalline as well as amorphous samples.

A Sorptomatic 1990 from ThermoQuest is used to determine the specific surface area of the produced powder. The apparatus measures the adsorption isotherm of nitrogen on the sample and calculates the surface area from this isotherm.

Example 1

Production of nano-sized TiO$_2$

In this example the production of nano-sized crystalline TiO$_2$ by a batch process is described. The precursor in this example is a 97 % titaniumtetraisopropoxide, Ti(OPr$^i$)$_4$, from Sigma Aldrich. It will in the following be referred to as TTIP. The TTIP reacts with distilled water in a supercritical environment including reactor filling material acting as seeds or catalyst material. The supercritical fluid is in this example $CO_2$. The experimental set up is shown in Figure 2 and the batch process is generically described in the Equipment and Preparation section.

The process equipment consists of a reactor where the supercritical sol-gel reaction takes place. The reactor in this example comprises reactor filling material in the form of fibres. The reactor is placed in an oven where the pressure and temperature can be controlled. The pressure can be changed from 1-680 bars depending on the desired product and is controlled by a pump (P1). The temperature can be changed from 25-250 °C and is controlled by a temperature regulator (T1). The setup is a Spe-ed SFE-2 from Applied Separation Inc.

In the batch experiment the supercritical reactor is first filled with reactor filling material. The TTIP is than injected in the top of the reactor into the reactor filling material and the water is injected in the bottom of the reactor into the reactor filling material. The amount of reactor filling material is adjusted as to prevent the reaction to take place before the CO2 is added to the reactor. The reactor is than placed in the preheated oven at 96°C. The $CO_2$ is added immediately having an entering temperature of 1.3°C and a pressure of 60 bar. The pressure is raised to the starting set point, 100 bar. The temperature in the reactor is reaching the set point in 30 minutes. As a result of the increasing temperature of the reactor, from room temperature to 96°C, the pressure is increasing from 100 bar to approximately 170-200 bar in 30 minutes. The experimental parameters and the reactants amount for a standard experiment for $TiO_2$ is shown in table 4.

Table 4. Standard experiment

| Temperature | Pressure | Reaction time | $V_{TTIP}$ | $V_{H2O}$ | Reactor filling material |
|---|---|---|---|---|---|
| 96°C | 100 bar | 4 hours | 2.10 ml | 1.00 ml | Hydrophilic PP |

The amount of TTIP in a standard experiment is 2.10 ml and the amount of distilled water is 1.00 ml that gives a hydrolysis ratio on 7.87. The filling material used is hydrophilic polypropylene polymer fibres (PP).

The standard experiment with the above process parameters has, according to the present invention, enabled the production of a pure anatase phase $TiO_2$. This is shown in Figure 4, where an x-ray diffraction spectrum of a powder produced using the above equipment and method is shown. In the figure, the spectrum of the product is compared to diffraction lines expected from pure anatase. It is seen that except for broadening, which is due to the small size of the crystalline particle the observed lines coincide with those expected from anatase. No other $TiO_2$ phases are present. The crystallite size, $\tau$, of this production run has been determined to be approximately 10 nm. The following table shows the characteristic results of materials produced by the above preparation method and process parameters.

Table 5. Characteristics of $TiO_2$ powders produced by standard experiments

|  | Standard experiment |
|---|---|
| Crystalline phase | Anatase |
| $\tau$ [nm] | $10.7 \pm 1.0$ |
| Crystallinity [%] | $40.0 \pm 5.0$ |
| Particle size by SAXS [nm] | $12.6 \pm 1.0$ |
| Particle size by SEM [nm] | $\sim20 \pm 5$ |
| Specific surface area [$m^2/g$] | $236 \pm 20$ |

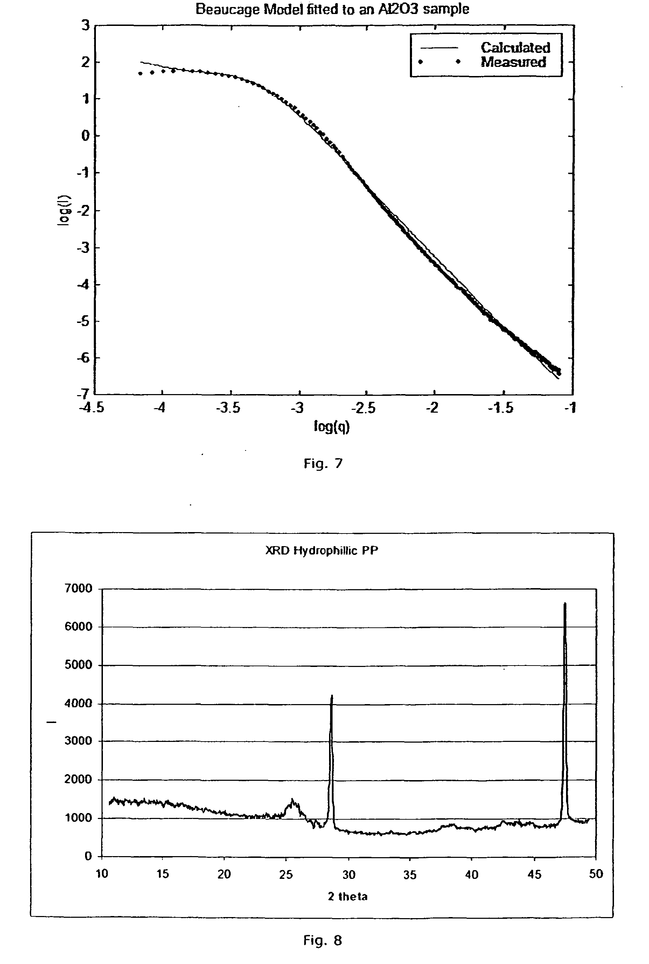

Table 5 shows that the result obtained by the present invention. The crystallinity of the product is $40 \pm 5$ % over a series of 5 experiments. The remaining part is amorphous $TiO_2$. The average particle size estimated by the crystallite size is $10.7 \pm 1.0$ nm. Both particle size and crystallinity were derived from spectra like the one shown in Figure 8. The SAXS measurement confirms that the powder consist of primary particle of 10-15 nm. The SEM analysis also reveals that the samples are made out of nano-sized primary particles in a range from 15-25 nm. These primary particles are then agglomerated into larger aggregates. The BET measurement shows that the samples have a large surface area of 236 $m^2/g$.

Example 1A

Production of $TiO_2$ with changing reaction times

In the following example the consequence of changing the process time is described. The experiment is a standard experiment as described in example 1 but the reaction time is changed. In the following table the influence of changing the process time is shown.

Table 6. Characteristics of $TiO_2$ powders produced at different reaction times

|                    | 2 hours | 4 hours | 8 hours |
|--------------------|---------|---------|---------|
| Crystalline Phase  | Anatase | Anatase | Anatase |
| $\tau$ [nm]        | 8.5     | 10.7    | 10.7    |
| Crystallinity [%]  | 39.5    | 40.0    | 39.4    |

By changing the reaction time the primary particle size changes slightly from 2 to 4 hours but does not change from 4 to 8 hours. The increase of the reaction time does not result in an increase of the crystallinity of the samples. The crystallinity is at all reaction times approximately 40 %.

Example 1B

Production of $TiO_2$ at 43°C

In this example a standard experiment is carried out as described in example 1 but the temperature is lowered to 43°C. The results from this experiment is shown in table 7

Table 7. Characteristics of $TiO_2$ powders produced at 43°C

|                    | $TiO_2$   |
|--------------------|-----------|
| Crystalline phase  | Amorphous |
| $\tau$ [nm]        | -         |
| Crystallinity      | Amorphous |
| $R_9$ [nm]         | 2.8       |

It is shown in table 7 that the powder is amorphous when produced at 43°C. The size of the primary particles is determined by SAXS and is as low as 5.6 nm in diameter.

Example 2

Production of $TiO_2$ with different reactor filling material

In this example the influence of different reactor filling material is investigated. 5 different filling materials are examined and the influence on the product properties is determined. The reactor filling material is divided into 4 categories: polymers (in form of fibres), ceramics (in form of small balls), metals (in form of steel wool) and natural material (a sheet of flax). Two polypropylene (PP) polymers with different surface properties are investigated.
Ten standard experiments, like those described in example 1, were carried out. Five different reactor filling materials were used and the amount was adjusted separately. For each experiment the amount was determined so the reactants did not react before the supercritical $CO_2$ was added. In table 8 the results from these experiments are shown. The results are average values from the 2 experiments for each material.

Table 8. Measured properties of produced $TiO_2$ with different filling materials

|               | PP hydrophilic | PP hydrophobic | Ceramic | Metal fibre | Natural fibre |
|---------------|----------------|----------------|---------|-------------|---------------|
| Crystal phase | Anatase        | Anatase        | Anatase | Anatase     | Anatase       |

(continued)

|  | PP hydrophilic | PP hydrophobic | Ceramic | Metal fibre | Natural fibre |
|---|---|---|---|---|---|
| Crystallinity [%] | 40.0 ± 5.0 | 32.4 ± 4.0 | 28.0 ± 5.5 | 25.7 ± 5.5 | 16.0 ± 4.0 |
| Crystal size [nm] | 12.4 ± 2.0 | 13.0 ± 2.0 | 13.4 ± 2.0 | 12.6 ± 2.0 | 18.5 ± 5.0 |

From table 8 it can be seen that the highest crystallinity comes from using the hydrophilic PP as reactor filling material. It gives 40 % crystalline $TiO_2$ on anatase phase. The natural material is not so applicable for producing crystalline $TiO_2$, only 16 % anatase phase. In between is the hydrophobic PP, the ceramic and metal fibres. These 3 reactor filling materials gives all around 25-33 % crystalline $TiO_2$ and because of uncertainties it is not possible to distinguish between these 3 reactor filling materials regarding crystallinity. It can also be seen that these 3 materials plus the hydrophilic PP gives the same crystal size of 12.4 to 13.4 nm. The natural material gives a larger crystal size of 18.5 nm. The larger crystallite size is due to bigger uncertainties in determining the peak parameters resulting from a smaller peak. From the results in table 8 it is shown that using these 5 materials all give crystalline $TiO_2$ at anatase phase.

Example 3

Production of $Al_2O_3$

In this example the production of nano-sized $Al_2O_3$ by a batch process is described. The precursor in this example is aluminium-sec-butoxide, $Al(OBu^5)_3$, from Sigma Aldrich. The hydrophilic polypropylene fibres are used as reactor filling material. The reactor filling material, $Al(OBu^5)_3$ and water is placed in the reactor before inserting it in the oven and the experiment is carried out as in example 1. In table 9 the process parameters and reactant amount are shown.

Table 9. $Al_2O_3$ experiment

| Temperature | Pressure | Reaction time | $V_{Al(OBus)3}$ | $V_{H2O}$ | Reactor filling material |
|---|---|---|---|---|---|
| 96°C | 100 bar | 4 hours | 2.10 ml | 1.00 ml | Hydrophilic PP |

The reactant amounts give a hydrolysis ratio of 6.8. The produced material is nano-sized and weak crystalline. The particle properties are shown in table 10.

Table 10. Characteristics of $Al_2O_3$ powders

|  | $Al_2O_3$ |
|---|---|
| Crystallinity | Weak |
| $R_9$ [nm] | 9.7 |

The size of the primary particle is determined by SAXS measurement which yields a diameter of 19.4 nm. The SAXS spectrum is shown in Figure 7.

Example 3A

Production of $Al_2O_3$ at 173 °C

In this example Al2O3 is produced at a higher temperature and hydrolysis ratio than example 3. A batch process makes the production and the precursor in this example is aluminium-sec-butoxide, $Al(OBu^5)_3$, from Sigma Aldrich. The metal fibre is used as reactor filling material. The reactor filling material, $Al(OBu^5)_3$ and water is placed in the reactor before inserting it in the oven and the experiment is carried out like example 1. In table 11 the process parameters and reactant amounts are shown.

Table 11 $Al_2O_3$ experiment

| Temperature | Pressure | Reaction time | $V_{Al(OBus)3}$ | $V_{H2O}$ | Reactor filling material |
|---|---|---|---|---|---|
| 173°C | 100 bar | 4 hours | 0.96 ml | 2.00 ml | Metal fibre |

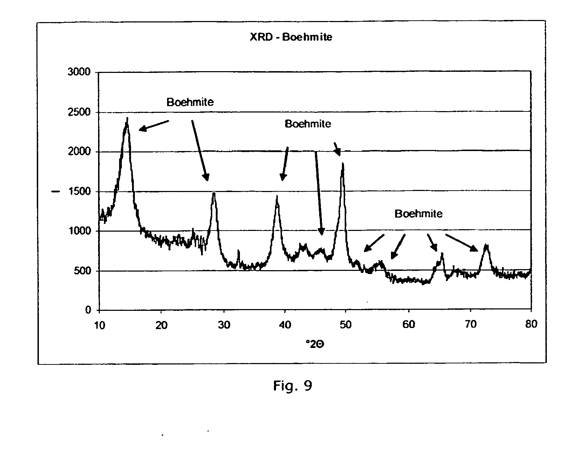

The reactant amounts give a hydrolysis ratio of 29.9. The produced material is nano-sized and consists of the crystalline aluminium oxide hydroxide phase Boehmite. The characteristics of the produced powder are shown in table 12 and the diffraction spectrum is shown in Figure 9.

Table 12. Characteristics of AlOOH powders produced at 173°C

|  | AlOOH |
| --- | --- |
| Crystalline phase | Boehmite |
| $\tau_{28\cdot4°2\theta}$ [nm] | 12.7 |
| Crystallinity | 93.5 % |

The powder consists of 94 % crystalline Boehmite the main remaining part is amorphous powder but the powder also consists of a small fraction of aluminium transitions oxide/hydroxide phase. The crystals are 12.7 nm in dimensions determined by Scherrers formula.

References:

[Andersen, 1975]
J. R. Andersen.
Structure of Metallic Catalysts.
Acedemic Press, 1975.
[Beaucage and Schaefer, 1994]
Beaucage, G. and D. W. Schaefer.
"Structural studies of complex systems using small angle scattering: a unified Guinier|power law approach."
Journal of Non-Crystalline Solids 172-174: 797-805, (1994).
[Brinker et al., 1990]
C. Jeffrey Brinker, George W. Scherer.
Sol-gel Science, The Physics and Chemistry of Sol-Gel Processing Academic Press 1990.
[Jenkins et al., 1996]
Ron Jenkins and Robert L. Snyder.Introduction to X-ray Powder Diffractometry.John Wiley & Sons, Inc., 1996.
[Jessop et al., 1999]
Philip G. Jessop and Walter Leitner.Chemical Synthesis Using Supercritical Fluids.Wiley-VCH, 1999.
[Livage et al., 1988]
J. Livage, M. Henry and C. Sanchez.Sol-Gel Chemistry of Transition Metal Oxides.Progress in Solid State Chemistry, 18 (4), 259-342, 1988.
[Moran et al., 1999]
Paul D. Moran, John R. Bartlett, Graham A. Bowmaker, James L. Woolfrey, Ralph P. Cooney.
Formation of $TiO_2$ Sols, Gels and Nanopowders from Hydrolysis of $Ti(O^iPr)_4$ in AOT Reverse Micelles.
Journal of Sol-Gel Science and Technology 15, 251-262, 1999.
[Porter et al., 1999]
Porter, J. F., Y.-G. Li and C. K. Chan.
"The effect of calcination on the microstructural characteristics and photoreactivity of degussa P-25 $TiO_2$."
J. Mat. Sci 34: 1523-1531 (1999).
[Pozzo et al., 2002]
Pozzo, R. L., A. E. Cassano and M. A. Baltanás. "The Performance in Fluidized Bed Reactors of Photo catalysts Immobilized onto Inert Supports."
http://www.unl.edu.ar/cepac/abstract/bbaltana.htm. (2002)
[Soloviev, 2000]
Soloviev, A.
Sol-Gel Process: Study of the Kinetics of Particle Growth by Light Scattering Technique. Ph.D. Thesis, Université Paris Nord, (2000).
[Stojanovic et al., 2000]
B. D. Stojanovic, Z. V. Marinkovic, G. O. Brankovic and E. Fridancevska. Evaluation of Kinetic Data for Crystallization of TiO2 prepared by Hydrolysis Method. Jour. of Thermal Analysis and Calorimetry, Vol. 60, 595-604, 2000.

**Claims**

1. Method of manufacturing a metal oxide, metal oxyhydroxide or metal hydroxide product, said product having a sub-micron primary particle size, comprising the steps of:

   - introducing a solid reactor filling material in a reactor,
   - introducing a metal-containing precursor in said reactor,
   - introducing a co-solvent into the said reactor,
   - introducing a supercritical solvent into the said reactor, thereby
   - establishing a contact between the metal-containing precursor and the co-solvent, thus
   - resulting in the formation of said product in the proximity of the said solid reactor filling material.

2. Method according to claim 1, wherein the formation of said product takes place by a process involving at least a sol-gel reaction.

3. Method according to any of claims 1-2, wherein the introduction of the solid reactor filling material, the metal-containing precursor, the co-solvent, and the supercritical solvent into the said reactor is done in arbitrary order.

4. Method according to any of claims 1-3, wherein at least one of the solid reactor filling material, the metal-containing precursor, the co-solvent or the supercritical solvent is mixed with at least one of the solid reactor filling material, the metal-containing precursor, the co-solvent or the supercritical solvent before introduction into the said reactor.

5. Method according to any of claims 1-4, wherein the metal oxide, metal oxyhydroxide or metal hydroxide product is manufactured in a mode selected from the group of: a batch mode, a quasi-batch mode and a substantially continuos mode.

6. Method according to any of claims 1-5, wherein a temperature in the reactor during the formation of said product is kept at a fixed temperature.

7. Method according to any of claims 1-5, wherein a temperature in the reactor during the formation of said product is performed at an increasing temperature.

8. Method according to any of claims 1-5, wherein a temperature in the reactor during the formation of said product is performed at a decreasing temperature.

9. Method according to any of claims 1-5, wherein a temperature in the reactor during the formation of said product is performed at a temperature profile being an arbitrary combination at least two of the temperature profiles: a fixed temperature, an increasing temperature, a decreasing temperature.

10. Method according to any of claims 6-9, wherein the temperature in the reactor during the formation of said product is maximum 400°C, more preferably maximum 300°C, even more preferably maximum 200°C, most preferably maximum 100°C, and even and most preferably maximum 50°C.

11. Method according to any of claims 1-10, wherein a pressure in the reactor during the formation of said product is kept at a fixed pressure.

12. Method according to any of claims 1-10, wherein a pressure in the reactor during the formation of said product is performed at an increasing pressure.

13. Method according to any of claims 1-10, wherein a pressure in the reactor during the formation of said product is performed at a decreasing pressure.

14. Method according to any of claims 1-10, wherein a pressure in the reactor during the formation of said product is performed at a pressure profile being an arbitrary combination at least two of the pressure profiles: a fixed pressure, an increasing pressure, a decreasing pressure.

15. Method according to any of claims 1-14, wherein the supercritical solvent is $CO_2$, and wherein the pressure in the reactor during the formation of said product is minimum 74 bar, more alternatively minimum 80 bar, even more alternatively minimum 90 bar, and most alternatively minimum 100 bar.

16. Method according to any of claims 1-15, wherein the supercritical solvent is $CO_2$, and wherein the temperature in the reactor during the formation of said product is minimum 31°C, alternatively 43°C, more alternatively minimum 100°C, even more alternatively minimum 200°C, most alternatively minimum 300°C, and even and most alternatively minimum 400°C.

17. Method according to any of claims 1-14, wherein the supercritical solvent is isopropanol, and wherein the pressure in the reactor during the formation of said product is minimum 47 bar, more alternatively minimum 80 bar, even more alternatively minimum 90 bar, and most alternatively minimum 100 bar.

18. Method according to any of claims 1-14 or claim 17, wherein the supercritical solvent is isopropanol, and wherein the temperature in the reactor during the formation of said product is minimum 235°C, more alternatively minimum 250°C, even more alternatively minimum 270°C, most alternatively minimum 300°C, and even and most alternatively minimum 400°C.

19. Method according to any of claims 1-18, wherein the supercritical solvent is supercritical before the introduction into said reactor.

20. Method according to any of claims 1-18, wherein the supercritical solvent is brought into a supercritical phase after the introduction into said reactor.

21. Method according to any of claims 1-20, wherein the time of the formation of said product is maximum 1 hour, preferably maximum 0,75 hour, and most preferably maximum 0,5 hour.

22. Method according to any of claims 1-20, wherein the time of the formation of said product is maximum 8 hours, preferably maximum 6 hours, and most preferably maximum 2 hours.

23. Method according to any of claims 1-20, wherein the time of the formation of said product is maximum 24 hours, preferably maximum 17 hours, and most preferably maximum 10 hours.

24. Method according to any of claims 1-23, wherein a plurality of different metal-containing precursors is introduced in said reactor.

25. Method according to any of claims 1-24, wherein the metal-containing precursor is a metal alkoxide.

26. Method according to any of claims 1-25, wherein the metal-containing precursor is selected from the group of : titanium tetraisopropoxide, titanium butoxide, titanium ethoxide, and titanium methoxide.

27. Method according to any of claims 1-25, wherein the metal-containing precursor is selected from the group of: aluminium isopropoxide and aluminium-sec-butoxide.

28. Method according to any of claims 1-24 wherein the metal-containing precursor is magnesium ethoxide.

29. Method according to any of claims 1-24, wherein the metal-containing precursor is a metal salt.

30. Method according to any of claims 1-24 or claim 29, wherein the metal-containing precursor is $Ti(SO_4)_2$.

31. Method according to any of claims 1-24 or claim 29, wherein the metal-containing precursor is selected from the group of: $TiCl_4$ and $AlCl_3$.

32. Method according to any of claims 1-31, wherein the co-solvent is selected from the group of: water, ethanol, methanol, hydrogenperoxid and isopropanol.

33. Method according to any of claims 1-32, wherein a plurality of different co-solvents is introduced in said reactor.

34. Method according to any of claims 1-33, wherein the solid reactor filling material functions as a heterogeneous catalyst.

**35.** Method according to claim 34, wherein the solid reactor filling material comprises at least one promoter.

**36.** Method according to any of claims 1-35, wherein the solid reactor filling material is constituted by at least one fibre.

**37.** Method according to any of claims 1-35, wherein the solid reactor filling material is constituted by a powder.

**38.** Method according to any of claims 1-35, wherein the solid reactor filling material has the shape selected from the group of: a sponge, a grid, a wad of fibres, and a sheet.

**39.** Method according to any of claims 1-38, wherein the solid reactor filling material has a substantially porous structure.

**40.** Method according to any of claims 1-39, wherein the solid reactor filling material has a size and shape capable of substantially confining the metal-containing precursor to a limited part of the reactor.

**41.** Method according to any of claims 1-40, wherein the solid reactor filling material comprises a polymer.

**42.** Method according to claim 41, wherein the polymer is selected from the group of:

polystyrene (PS), polypropylene (PP), polyethylene (PE), polyvinyl chloride (PVC), polyvinylidene chloride (PVDC), and polyvinyl acetate (PVAc).

**43.** Method according to claim 41, wherein the polymer is selected from the group of:

acrylic polymer, fluorinated polymer, diene polymer, vinyl copolymer, polyamide polymer, polyester polymer, polyether polymer, and polyimide polymer.

**44.** Method according to any of claims 1-40, wherein the solid reactor filling material comprises a metal.

**45.** Method according to claim 44, wherein the metal is selected from the group of:

titanium, aluminium, zinc, vanadium, magnesium, zirconium, chromium, molybdenum, niobium, tungsten, copper, and iron.

**46.** Method according to any of claims 1-40, wherein the solid reactor filling material comprises a metal oxide.

**47.** Method according to claim 46, wherein the metal oxide is selected from the group of:

titanium oxide, zinc oxide, copper oxide, aluminium oxide, vanadium oxide, magnesium oxide, zirconium oxide, chromium oxide, silicium oxide, molybdenum oxide, niobium oxide, tungsten oxide, and iron oxide.

**48.** Method according to any of claims 1-40, wherein the solid reactor filling material comprises a ceramic.

**49.** Method according to any of claims 1-40, wherein the solid reactor filling material comprises a metal sulphate.

**50.** Method according to any of claims 1-40, wherein the solid reactor filling material comprises a metal halide.

**51.** Method according to any of claims 1-50, wherein the solid reactor filling material comprises a metal oxide, a metal oxyhydroxide or a metal hydroxide identical to said product resulting from the formation in said reactor.

**52.** Method according to any of claims 1-51, wherein the solid reactor filling material functions as seed material for the formation of said product.

**53.** Method according to any of claims 1-52, wherein the solid reactor filling material functions as a collecting agent for the said product.

**54.** Method according to any of claims 1-53, wherein said product is separable from the solid reactor filling material with no further treatments of the solid reactor filling material.

55. Method according to any of claims 1-54, wherein said product is separable from the solid reactor filling material without substantially degrading the solid reactor filling material.

56. Method according to any if claims 1-55, wherein said product is separable from the solid reactor filling material in a way that allows the solid reactor filling material to be re-used as solid reactor filling material.

57. Method according to any of claims 1-53, wherein said product is separable from the solid reactor filling material by flushing the solid reactor filling material in a fluid.

58. Method according to any of claims 1-53, wherein said product is separable from the solid reactor filling material by vacuum means.

59. Method according to any of claims 1-53, wherein said product is separable from the solid reactor filling material by blowing means.

60. Method according to any of claims 1-53, wherein said product is separable from the solid reactor filling material by ultrasonic means.

61. Apparatus for manufacturing a metal oxide, metal oxyhydroxide or metal hydroxide product, said product having a sub-micron primary particle size, said apparatus comprising the following components:

- a solid reactor filling material in a reactor,
- means for introducing a metal-containing precursor in said reactor,
- means for introducing a co-solvent into the said reactor,
- means for introducing a supercritical solvent into the said reactor,
- said reactor intended as a space for establishing a contact between the metal-containing precursor and the co-solvent and
- said reactor intended as a space for the formation of said product in the proximity of the said solid reactor filling material.

62. An apparatus according to claim 61 comprising means for introducing the solid reactor filling material into the reactor.

63. An apparatus according to claim 61 or 62 comprising means for extracting the solid reactor filling material from the reactor.

**Patentansprüche**

1. Verfahren zur Herstellung eines Metalloxid-, Metalloxyhydroxid- oder Metallhydroxidprodukts, wobei das Produkt eine primäre Teilchengröße im Submikronbereich aufweist, umfassend die folgenden Schritte:

- Eintragen eines festen Reaktorfüllmaterials in einen Reaktor,
- Eintragen einer metallhaltigen Vorstufe in den Reaktor,
- Eintragen eines Hilfslösungsmittels in den Reaktor,
- Eintragen eines superkritischen Lösungsmittels in den Reaktor, wodurch
- ein Kontakt zwischen der metallhaltigen Vorstufe und dem Hilfslösungsmittel hergestellt wird, was
- zur Ausbildung des Produkts in der Nähe des festen Reaktorfüllmaterials führt.

2. Verfahren nach Anspruch 1, wobei die Ausbildung des Produkts im Rahmen eines Verfahrens stattfindet, das mindestens eine Sol-Gel-Reaktion beinhaltet.

3. Verfahren nach einem der Ansprüche 1-2, wobei das Eintragen des festen Reaktorfüllmaterials, der metallhaltigen Vorstufe, des Hilfslösungsmittels und des superkritischen Lösungsmittels in den Reaktor in zufälliger Reihenfolge erfolgt.

4. Verfahren nach einem der Ansprüche 1-3, wobei vor dem Eintragen in den Reaktor mindestens eines des festen Reaktorfüllmaterials, der metallhaltigen Vorstufe, des Hilfslösungsmittels oder des superkritischen Lösungsmittels mit mindestens einem des festen Reaktorfüllmaterials, der metallhaltigen Vorstufe, des Hilfslösungsmittels oder des superkritischen Lösungsmittels vermischt wird.

5. Verfahren nach einem der Ansprüche 1-4, wobei das Metalloxid-, Metalloxyhydroxid- oder Metallhydroxidprodukt auf eine Weise hergestellt wird, ausgewählt aus der Gruppe: Chargenverfahren, Quasichargenverfahren und im Wesentlichen kontinuierliches Verfahren.

6. Verfahren nach einem der Ansprüche 1-5, wobei während der Ausbildung des Produkts eine Temperatur im Reaktor auf einer unveränderlichen Temperatur gehalten wird.

7. Verfahren nach einem der Ansprüche 1-5, wobei während der Ausbildung des Produkts eine Temperatur im Reaktor auf einer ansteigenden Temperatur gehalten wird.

8. Verfahren nach einem der Ansprüche 1-5, wobei während der Ausbildung des Produkts eine Temperatur im Reaktor auf einer fallenden Temperatur gehalten wird.

9. Verfahren nach einem der Ansprüche 1-5, wobei während der Ausbildung des Produkts eine Temperatur im Reaktor auf einem Temperaturprofil gehalten wird, das eine zufällige Kombination aus mindestens zwei der folgenden Temperaturprofile ist: unveränderliche Temperatur, ansteigende Temperatur, fallende Temperatur.

10. Verfahren nach einem der Ansprüche 6-9, wobei die Temperatur im Reaktor während der Ausbildung des Produkts höchstens 400 °C, mir bevorzugt höchstens 200 °C, noch mehr bevorzugt höchstens 200 °C, am meisten bevorzugt höchstens 100 °C und noch und am meisten bevorzugt höchstens 50 °C beträgt.

11. Verfahren nach einem der Ansprüche 1-10, wobei während der Ausbildung des Produkts ein Druck im Reaktor auf einem unveränderlichen Druck gehalten wird.

12. Verfahren nach einem der Ansprüche 1-10, wobei während der Ausbildung des Produkts ein Druck im Reaktor auf einem ansteigenden Druck gehalten wird.

13. Verfahren nach einem der Ansprüche 1-10, wobei während der Ausbildung des Produkts ein Druck im Reaktor auf einem fallenden Druck gehalten wird.

14. Verfahren nach einem der Ansprüche 1-10, wobei während der Ausbildung des Produkts ein Druck im Reaktor auf einem Druckprofil gehalten wird, das eine zufällige Kombination aus mindestens zwei der folgenden Druckprofile ist: unveränderlicher Druck, ansteigender Druck, fallender Druck.

15. Verfahren nach einem der Ansprüche 1-14, wobei das superkritische Lösungsmittel $CO_2$ ist und wobei der Druck im Reaktor während der Ausbildung des Produkts mindestens 74 bar, mehr alternativ mindestens 80 bar, noch mehr alternativ mindestens 90 bar und am meisten alternativ mindestens 100 bar beträgt.

16. Verfahren nach einem der Ansprüche 1-15, wobei das superkritische Lösungsmittel $CO_2$ ist und wobei die Temperatur im Reaktor während der Ausbildung des Produkts mindestens 31 °C, alternativ 43 °C, mehr alternativ mindestens 100 °C, noch mehr alternativ mindestens 200 °C, am meisten alternativ mindestens 300 °C und noch und am meisten alternativ mindestens 400 °C beträgt.

17. Verfahren nach einem der Ansprüche 1-14, wobei das superkritische Lösungsmittel Isopropanol ist und wobei der Druck im Reaktor während der Ausbildung des Produkts mindestens 47 bar, mehr alternativ mindestens 80 bar, noch mehr alternativ mindestens 90 bar und am meisten alternativ mindestens 100 bar beträgt.

18. Verfahren nach einem der Ansprüche 1-14 oder nach Anspruch 17, wobei das superkritische Lösungsmittel Isopropanol ist und wobei die Temperatur im Reaktor während der Ausbildung des Produkts mindestens 235 °C, mehr alternativ mindestens 250 °C, noch mehr alternativ mindestens 270 °C, am meisten alternativ mindestens 300 °C und noch und am meisten alternativ mindestens 400 °C beträgt.

19. Verfahren nach einem der Ansprüche 1-18, wobei das superkritische Lösungsmittel vor dem Eintragen in den Reaktor superkritisch ist.

20. Verfahren nach einem der Ansprüche 1-18, wobei das superkritische Lösungsmittel nach dem Eintragen in den Reaktor in eine superkritische Phase gebracht wird.

21. Verfahren nach einem der Ansprüche 1-20, wobei die Dauer der Ausbildung des Produkts maximal 1 Stunde, vorzugsweise maximal 0,75 Stunden und am meisten bevorzugen maximal 0,5 Stunden beträgt.

22. Verfahren nach einem der Ansprüche 1-20, wobei die Dauer der Ausbildung des Produkts maximal 8 Stunden, vorzugsweise maximal 6 Stunden und am meisten bevorzugen maximal 2 Stunden beträgt.

23. Verfahren nach einem der Ansprüche 1-20, wobei die Dauer der Ausbildung des Produkts maximal 24 Stunden, vorzugsweise maximal 17 Stunden und am meisten bevorzugen maximal 10 Stunden beträgt.

24. Verfahren nach einem der Ansprüche 1-23, wobei mehrere verschiedene metallhaltige Vorstufen in den Reaktor eingetragen werden.

25. Verfahren nach einem der Ansprüche 1-24, wobei die metallhaltige Vorstufe ein Metallalkoxid ist.

26. Verfahren nach einem der Ansprüche 1-25, wobei die metallhaltige Vorstufe ausgewählt ist aus der Gruppe: Titantetraisopropoxid, Titanbutoxid, Titanethoxid und Titanmethoxid.

27. Verfahren nach einem der Ansprüche 1-25, wobei die metallhaltige Vorstufe ausgewählt ist aus der Gruppe: Aluminiumisopropoxid und Aluminium-sec-butoxid.

28. Verfahren nach einem der Ansprüche 1-24, wobei die metallhaltige Vorstufe Magnesiumethoxid ist.

29. Verfahren nach einem der Ansprüche 1-24, wobei die metallhaltige Vorstufe ein Metallsalz ist.

30. Verfahren nach einem der Ansprüche 1-24 oder nach Anspruch 29, wobei die metallhaltige Vorstufe $Ti(SO_4)_2$ ist.

31. Verfahren nach einem der Ansprüche 1-24 oder nach Anspruch 29, wobei die metallhaltige Vorstufe ausgewählt ist aus der Gruppe: $TiCl_4$ und $AlCl_3$.

32. Verfahren nach einem der Ansprüche 1-31, wobei das Lösungsmittel ausgewählt ist aus der Gruppe: Wasser, Ethanol, Methanol, Wasserstoffperoxid und Isopropanol.

33. Verfahren nach einem der Ansprüche 1-32, wobei mehrere verschiedene Hilfslösungsmittel in den Reaktor eingetragen werden.

34. Verfahren nach einem der Ansprüche 1-33, wobei das feste Reaktorfüllmaterial als heterogener Katalysator dient.

35. Verfahren nach Anspruch 34, wobei das feste Reaktorfüllmaterial mindestens einen Promotor umfasst.

36. Verfahren nach einem der Ansprüche 1-35, wobei das feste Reaktorfüllmaterial aus mindestens einer Faser zusammengesetzt ist.

37. Verfahren nach einem der Ansprüche 1-35, wobei das feste Reaktorfüllmaterial aus mindestens einem Pulver zusammengesetzt ist.

38. Verfahren nach einem der Ansprüche 1-35, wobei das feste Reaktorfüllmaterial die Form hat, ausgewählt aus der Gruppe: Schwamm, Gitter, Faserknäuel und Blatt.

39. Verfahren nach einem der Ansprüche 1-38, wobei das feste Reaktorfüllmaterial eine im Wesentlichen poröse Struktur aufweist.

40. Verfahren nach einem der Ansprüche 1-39, wobei das feste Reaktorfüllmaterial eine Größe und eine Form aufweist, die die metallhaltige Vorstufe im Wesentlichen in einem begrenzten Teil des Reaktors festhält.

41. Verfahren nach einem der Ansprüche 1-40, wobei das feste Reaktorfüllmaterial ein Polymer umfasst.

42. Verfahren nach Anspruch 41, wobei das Polymer ausgewählt ist aus der Gruppe:

Polystyrol (PS), Polypropylen (PP), Polyethylen (PE), Polyvinylchlorid (PVC), Polyvinylidenchlorid (PVDC) und Polyvinylacetat (PVAc).

43. Verfahren nach Anspruch 41, wobei das Polymer ausgewählt ist aus der Gruppe:

Acrylpolymer, fluoriertes Polymer, Dienpolymer, Vinylcopolymer, Polyamidpolymer, Polyesterpolymer, Polyetherpolymer und Polyimidpolymer.

44. Verfahren nach einem der Ansprüche 1-40, wobei das feste Reaktorfüllmaterial ein Metall umfasst.

45. Verfahren nach Anspruch 44, wobei das Metall ausgewählt ist aus der Gruppe: Titan, Aluminium, Zink, Vanadium, Magnesium, Zirkon, Chrom, Molybdän, Niob, Wolfram, Kupfer und Eisen.

46. Verfahren nach einem der Ansprüche 1-40, wobei das feste Reaktorfüllmaterial ein Metalloxid umfasst.

47. Verfahren nach Anspruch 46, wobei das Metalloxid ausgewählt ist aus der Gruppe:

Titanoxid, Zinkoxid, Kupferoxid, Aluminiumoxid, Vanadiumoxid, Magnesiumoxid, Zirkonoxid, Chromoxid, Siliziumoxid, Molybdänoxid, Nioboxid, Wolframoxid und Eisenoxid.

48. Verfahren nach einem der Ansprüche 1-40, wobei das feste Reaktorfüllmaterial eine Keramik umfasst.

49. Verfahren nach einem der Ansprüche 1-40, wobei das feste Reaktorfüllmaterial ein Metallsulfat umfasst.

50. Verfahren nach einem der Ansprüche 1-40, wobei das feste Reaktorfüllmaterial ein Metallhalogenid umfasst.

51. Verfahren nach einem der Ansprüche 1-50, wobei das feste Reaktorfüllmaterial ein Metalloxid, ein Metalloxyhydroxid oder ein Metallhydroxid umfasst, das identisch mit dem Produkt ist, das aus der Ausbildung im Reaktor resultiert.

52. Verfahren nach einem der Ansprüche 1-51, wobei das feste Reaktorfüllmaterial als Impfmaterial zur Ausbildung des Produkts dient.

53. Verfahren nach einem der Ansprüche 1-52, wobei das feste Reaktorfüllmaterial als Sammelmittel für das Produkt dient.

54. Verfahren nach einem der Ansprüche 1-53, wobei das Produkt ohne weitere Behandlungen des festen Reaktorfüllmaterials von dem festen Reaktorfüllmaterial abtrennbar ist.

55. Verfahren nach einem der Ansprüche 1-54, wobei das Produkt ohne wesentliche Zersetzung des festen Reaktorfüllmaterials von dem festen Reaktorfüllmaterial abtrennbar ist.

56. Verfahren nach einem der Ansprüche 1-55, wobei das Produkt derart von dem festen Reaktorfüllmaterial abtrennbar ist, dass eine Wiederverwendung des festen Reaktorfüllmaterials als festes Reaktorfüllmaterial möglich ist.

57. Verfahren nach einem der Ansprüche 1-53, wobei das Produkt durch Spülen des festen Reaktorfüllmaterials in einem Fluid von dem festen Reaktorfüllmaterial abtrennbar ist.

58. Verfahren nach einem der Ansprüche 1-53, wobei das Produkt durch Vakuummittel von dem festen Reaktorfüllmaterial abtrennbar ist.

59. Verfahren nach einem der Ansprüche 1-53, wobei das Produkt durch Blasmittel von dem festen Reaktorfüllmaterial abtrennbar ist.

60. Verfahren nach einem der Ansprüche 1-53, wobei das Produkt durch Ultraschallmittel von dem festen Reaktorfüllmaterial abtrennbar ist.

**61.** Vorrichtung zur Herstellung eines Metalloxid-, Metalloxyhydroxid- oder Metallhydroxidprodukts, wobei das Produkt eine primäre Teilchengröße im Submikronbereich aufweist, wobei die Vorrichtung die folgenden Bestandteile umfasst:

- ein festes Reaktorfüllmaterial in einen Reaktor,
- Mittel zum Eintragen einer metallhaltigen Vorstufe in den Reaktor,
- Mittel zum Eintragen eines Hilfslösungsmittels in den Reaktor,
- Mittel zum Eintragen eines superkritischen Lösungsmittels in den Reaktor,
- wobei der Reaktor als ein Raum zur Herstellung eines Kontakts zwischen der metallhaltigen Vorstufe und dem Hilfslösungsmittel vorgesehen ist und
- der Reaktor als ein Raum zur Ausbildung des Produkts in der Nähe des festen Reaktorfüllmaterials vorgesehen ist.

**62.** Vorrichtung nach Anspruch 61, umfassend Mittel zum Eintragen des festen Reaktorfüllmaterials in den Reaktor.

**63.** Vorrichtung nach Anspruch 61 oder 62, umfassend Mittel zum Extrahieren des festen Reaktorfüllmaterials aus dem Reaktor.

## Revendications

**1.** Procédé de fabrication d'un produit de type oxyde métallique, oxyhydroxyde métallique ou hydroxyde métallique, ledit produit présentant une granulométrie primaire submicronique, comprenant les étapes suivantes :

- introduction d'un matériau de remplissage de réacteur solide dans un réacteur,
- introduction d'un précurseur contenant du métal dans ledit réacteur,
- introduction d'un cosolvant dans ledit réacteur,
- introduction d'un solvant supercritique dans ledit réacteur, de manière à
- établir un contact entre le précurseur contenant du métal et le cosolvant, et ainsi
- induire la formation dudit produit à proximité dudit matériau de remplissage de réacteur solide.

**2.** Procédé selon la revendication 1, dans lequel la formation dudit produit se fait selon un processus impliquant au moins une réaction sol-gel.

**3.** Procédé selon l'une quelconque des revendications 1 à 2, dans lequel l'introduction du matériau de remplissage de réacteur solide, du précurseur contenant du métal, du cosolvant et du solvant supercritique dans ledit réacteur est effectuée dans un ordre arbitraire.

**4.** Procédé selon l'une quelconque des revendications 1 à 3, dans lequel au moins un élément parmi le matériau de remplissage de réacteur solide, le précurseur contenant du métal, le cosolvant ou le solvant supercritique est mélangé avec au moins un élément parmi le matériau de remplissage de réacteur solide, le précurseur contenant du métal, le cosolvant ou le solvant supercritique avant introduction dans ledit réacteur.

**5.** Procédé selon l'une quelconque des revendications 1 à 4, dans lequel le produit de type oxyde métallique, oxyhydroxyde métallique ou hydroxyde métallique est fabriqué selon un mode choisi dans le groupe suivant : mode discontinu, mode quasi-discontinu et mode essentiellement continu.

**6.** Procédé selon l'une quelconque des revendications 1 à 5, dans lequel une température dans le réacteur pendant la formation dudit produit est maintenue à une température fixe.

**7.** Procédé selon l'une quelconque des revendications 1 à 5, dans lequel une température dans le réacteur pendant la formation dudit produit est une température croissante.

**8.** Procédé selon l'une quelconque des revendications 1 à 5, dans lequel une température dans le réacteur pendant la formation dudit produit est une température décroissante.

**9.** Procédé selon l'une quelconque des revendications 1 à 5, dans lequel une température dans le réacteur pendant la formation dudit produit suit un profil de température qui est une combinaison arbitraire d'au moins deux des profils de température suivants :

température fixe, température croissante, température décroissante.

**10.** Procédé selon l'une quelconque des revendications 6 à 9, dans lequel la température dans le réacteur pendant la formation dudit produit est au maximum de 400 °C, plus préférentiellement au maximum de 300 °C, encore plus préférentiellement au maximum de 200 °C, le plus préférentiellement au maximum de 100 °C, et même et le plus préférentiellement au maximum de 50 °C.

**11.** Procédé selon l'une quelconque des revendications 1 à 10, dans lequel une pression dans le réacteur pendant la formation dudit produit est maintenue à une pression fixe.

**12.** Procédé selon l'une quelconque des revendications 1 à 10, dans lequel une pression dans le réacteur pendant la formation dudit produit est une pression croissante.

**13.** Procédé selon l'une quelconque des revendications 1 à 10, dans lequel une pression dans le réacteur pendant la formation dudit produit est une pression décroissante.

**14.** Procédé selon l'une quelconque des revendications 1 à 10, dans lequel une pression dans le réacteur pendant la formation dudit produit suit un profil de pression qui est une combinaison arbitraire d'au moins deux des profils de pression suivants : pression fixe, pression croissante, pression décroissante.

**15.** Procédé selon l'une quelconque des revendications 1 à 14, dans lequel le solvant supercritique est le $CO_2$, et dans lequel la pression dans le réacteur pendant la formation dudit produit est au minimum de 74 bars, plus alternativement au minimum de 80 bars, encore plus alternativement au minimum de 90 bars et le plus alternativement au minimum de 100 bars.

**16.** Procédé selon l'une quelconque des revendications 1 à 15, dans lequel le solvant supercritique est le $CO_2$, et dans lequel la température dans le réacteur pendant la formation dudit produit est au minimum de 31 °C, alternativement au minimum de 43 °C, plus alternativement au minimum de 100 °C, encore plus alternativement au minimum de 200 °C, le plus alternativement au minimum de 300 °C et même et le plus alternativement au minimum de 400 °C.

**17.** Procédé selon l'une quelconque des revendications 1 à 14, dans lequel le solvant supercritique est l'isopropanol, et dans lequel la pression dans le réacteur pendant la formation dudit produit est au minimum de 47 bars, plus alternativement au minimum de 80 bars, encore plus alternativement au minimum de 90 bars et le plus alternativement au minimum de 100 bars.

**18.** Procédé selon l'une quelconque des revendications 1 à 14 ou la revendication 17, dans lequel le solvant supercritique est l'isopropanol, et dans lequel la température dans le réacteur pendant la formation dudit produit est au minimum de 235 °C, plus alternativement au minimum de 250 °C, encore plus alternativement au minimum de 270 °C, le plus alternativement au minimum de 300 °C et même et le plus alternativement au minimum de 400 °C.

**19.** Procédé selon l'une quelconque des revendications 1 à 18, dans lequel le solvant supercritique est supercritique avant son introduction dans ledit réacteur.

**20.** Procédé selon l'une quelconque des revendications 1 à 18, dans lequel le solvant supercritique est porté à une phase supercritique après son introduction dans ledit réacteur.

**21.** Procédé selon l'une quelconque des revendications 1 à 20, dans lequel le temps de formation dudit produit est au maximum de 1 heure, préférentiellement au maximum de 0,75 heure, et le plus préférentiellement au maximum de 0,5 heure.

**22.** Procédé selon l'une quelconque des revendications 1 à 20, dans lequel le temps de formation dudit produit est au maximum de 8 heures, préférentiellement au maximum de 6 heures, et le plus préférentiellement au maximum de 2 heures.

**23.** Procédé selon l'une quelconque des revendications 1 à 20, dans lequel le temps de formation dudit produit est au maximum de 24 heures, préférentiellement au maximum de 17 heures, et le plus préférentiellement au maximum de 10 heures.

24. Procédé selon l'une quelconque des revendications 1 à 23, dans lequel plusieurs précurseurs contenant du métal différents sont introduits dans ledit réacteur.

25. Procédé selon l'une quelconque des revendications 1 à 24, dans lequel le précurseur contenant du métal est un alcoxyde métallique.

26. Procédé selon l'une quelconque des revendications 1 à 25, dans lequel le précurseur contenant du métal est choisi dans le groupe suivant : tétraisopropoxyde de titane, butoxyde de titane, éthoxyde de titane et méthoxyde de titane.

27. Procédé selon l'une quelconque des revendications 1 à 25, dans lequel le précurseur contenant du métal est choisi dans le groupe suivant : isopropoxyde d'aluminium et sec-butoxyde d'aluminium.

28. Procédé selon l'une quelconque des revendications 1 à 24, dans lequel le précurseur contenant du métal est l'éthoxyde de magnésium.

29. Procédé selon l'une quelconque des revendications 1 à 24, dans lequel le précurseur contenant du métal est un sel métallique.

30. Procédé selon l'une quelconque des revendications 1 à 24 ou la revendication 29, dans lequel le précurseur contenant du métal est le $Ti(SO_4)_2$.

31. Procédé selon l'une quelconque des revendications 1 à 24 ou la revendication 29, dans lequel le précurseur contenant du métal est choisi dans le groupe suivant : $TiCl_4$ et $AlCl_3$.

32. Procédé selon l'une quelconque des revendications 1 à 31, dans lequel le cosolvant est choisi dans le groupe suivant : eau, éthanol, méthanol, peroxyde d'hydrogène et isopropanol.

33. Procédé selon l'une quelconque des revendications 1 à 32, dans lequel plusieurs cosolvants différents sont introduits dans ledit réacteur.

34. Procédé selon l'une quelconque des revendications 1 à 33, dans lequel le matériau de remplissage de réacteur solide joue le rôle de catalyseur hétérogène.

35. Procédé selon la revendication 34, dans lequel le matériau de remplissage de réacteur solide contient au moins un promoteur.

36. Procédé selon l'une quelconque des revendications 1 à 35, dans lequel le matériau de remplissage de réacteur solide est constitué d'au moins une fibre.

37. Procédé selon l'une quelconque des revendications 1 à 35, dans lequel le matériau de remplissage de réacteur solide est constitué d'une poudre.

38. Procédé selon l'une quelconque des revendications 1 à 35, dans lequel le matériau de remplissage de réacteur solide présente une forme choisie dans le groupe suivant :

éponge, grille, tampon de fibres et feuille.

39. Procédé selon l'une quelconque des revendications 1 à 38, dans lequel le matériau de remplissage de réacteur solide présente une structure essentiellement poreuse.

40. Procédé selon l'une quelconque des revendications 1 à 39, dans lequel le matériau de remplissage de réacteur solide présente une taille et une forme permettant de confiner l'essentiel du précurseur contenant du métal dans une partie limitée du réacteur.

41. Procédé selon l'une quelconque des revendications 1 à 40, dans lequel le matériau de remplissage de réacteur solide contient un polymère.

**42.** Procédé selon la revendication 41, dans lequel le polymère est choisi dans le groupe suivant : polystyrène (PS), polypropylène (PP), polyéthylène (PE), polychlorure de vinyle (PVC), polychlorure de vinylidène (PVDC) et polyacétate de vinyle (PVAc).

**43.** Procédé selon la revendication 41, dans lequel le polymère est choisi dans le groupe suivant : polymère d'acrylique, polymère fluoré, polymère de diène, copolymère de vinyle, polymère de polyamide, polymère de polyester, polymère de polyéther et polymère de polyimide.

**44.** Procédé selon l'une quelconque des revendications 1 à 40, dans lequel le matériau de remplissage de réacteur solide contient un métal.

**45.** Procédé selon la revendication 44, dans lequel le métal est choisi dans le groupe suivant : titane, aluminium, zinc, vanadium, magnésium, zirconium, chrome, molybdène, niobium, tungstène, cuivre et fer.

**46.** Procédé selon l'une quelconque des revendications 1 à 40, dans lequel le matériau de remplissage de réacteur solide contient un oxyde métallique.

**47.** Procédé selon la revendication 46, dans lequel l'oxyde métallique est choisi dans le groupe suivant : oxyde de titane, oxyde de zinc, oxyde de cuivre, oxyde d'aluminium, oxyde de vanadium, oxyde de magnésium, oxyde de zirconium, oxyde de chrome, oxyde de silicium, oxyde de molybdène, oxyde de niobium, oxyde de tungstène et oxyde de fer.

**48.** Procédé selon l'une quelconque des revendications 1 à 40, dans lequel le matériau de remplissage de réacteur solide contient une céramique.

**49.** Procédé selon l'une quelconque des revendications 1 à 40, dans lequel le matériau de remplissage de réacteur solide contient un sulfate métallique.

**50.** Procédé selon l'une quelconque des revendications 1 à 40, dans lequel le matériau de remplissage de réacteur solide contient un halogénure métallique.

**51.** Procédé selon l'une quelconque des revendications 1 à 50, dans lequel le matériau de remplissage de réacteur solide contient un oxyde métallique, un oxyhydroxyde métallique ou un hydroxyde métallique identique au dit produit formé dans ledit réacteur.

**52.** Procédé selon l'une quelconque des revendications 1 à 51, dans lequel le matériau de remplissage de réacteur solide joue le rôle de matériau d'ensemencement pour la formation dudit produit.

**53.** Procédé selon l'une quelconque des revendications 1 à 52, dans lequel le matériau de remplissage de réacteur solide joue le rôle de collecteur pour ledit produit.

**54.** Procédé selon l'une quelconque des revendications 1 à 53, dans lequel ledit produit peut être séparé du matériau de remplissage de réacteur solide sans traitement supplémentaire du matériau de remplissage de réacteur solide.

**55.** Procédé selon l'une quelconque des revendications 1 à 54, dans lequel ledit produit peut être séparé du matériau de remplissage de réacteur solide sans dégrader de façon substantielle le matériau de remplissage de réacteur solide.

**56.** Procédé selon l'une quelconque des revendications 1 à 55, dans lequel ledit produit peut être séparé du matériau de remplissage de réacteur solide d'une façon permettant de réutiliser le matériau de remplissage de réacteur solide comme matériau de remplissage de réacteur solide.

**57.** Procédé selon l'une quelconque des revendications 1 à 53, dans lequel ledit produit peut être séparé du matériau de remplissage de réacteur solide par rinçage du matériau de remplissage de réacteur solide dans un fluide.

**58.** Procédé selon l'une quelconque des revendications 1 à 53, dans lequel ledit produit peut être séparé du matériau de remplissage de réacteur solide par un moyen sous vide.

**59.** Procédé selon l'une quelconque des revendications 1 à 53, dans lequel ledit produit peut être séparé du matériau de remplissage de réacteur solide par un moyen soufflant.

60. Procédé selon l'une quelconque des revendications 1 à 53, dans lequel ledit produit peut être séparé du matériau de remplissage de réacteur solide par un moyen ultrasonore.

61. Appareil pour la fabrication d'un produit de type oxyde métallique, oxyhydroxyde métallique ou hydroxyde métallique, ledit produit présentant une granulométrie primaire submicronique, ledit appareil comprenant les composants suivants :

- matériau de remplissage de réacteur solide dans un réacteur,
- moyen d'introduction d'un précurseur contenant du métal dans ledit réacteur,
- moyen d'introduction d'un cosolvant dans ledit réacteur,
- moyen d'introduction d'un solvant supercritique dans ledit réacteur,
- ledit réacteur conçu comme un espace pour établir un contact entre le précurseur contenant du métal et le cosolvant, et
- ledit réacteur conçu comme un espace pour la formation dudit produit à proximité dudit matériau de remplissage de réacteur solide.

62. Appareil selon la revendication 61 comprenant un moyen d'introduction du matériau de remplissage de réacteur solide dans le réacteur.

63. Appareil selon la revendication 61 ou 62 comprenant un moyen d'extraction du matériau de remplissage de réacteur solide du réacteur.

Fig. 1

Fig. 2

Fig. 3

Fig. 4

Fig. 5

Fig. 6

## Beaucage Model fitted to an Al2O3 sample

Fig. 7

## XRD Hydrophillic PP

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6387341 B, Sarrade

### Non-patent literature cited in the description

- *Journal of Non-Crystalline Solids,* 1994, vol. 172-174, 797-805
- Sol-gel Science, The Physics and Chemistry of Sol-Gel Processing. Academic Press, 1990
- **RON JENKINS ; ROBERT L. SNYDER.** Introduction to X-ray Powder Diffractometry. John Wiley & Sons, Inc, 1996
- **PHILIP G. JESSOP ; WALTER LEITNER.** Chemical Synthesis Using Supercritical Fluids. Wiley-VCH, 1999
- **J. LIVAGE ; M. HENRY ; C. SANCHEZ.** Sol-Gel Chemistry of Transition Metal Oxides. *Progress in Solid State Chemistry,* 1988, vol. 18 (4), 259-342
- *Journal of Sol-Gel Science and Technology,* 1999, vol. 15, 251-262
- *J. Mat. Sci,* 1999, vol. 34, 1523-1531
- **POZZO, R. L. ; A. E. CASSANO ; M. A. BALTANÁS.** *The Performance in Fluidized Bed Reactors of Photo catalysts Immobilized onto Inert Supports,* 2002
- Sol-Gel Process: Study of the Kinetics of Particle Growth by Light Scattering Technique. Ph.D. Thesis. Université Paris Nord, 2000
- **B. D. STOJANOVIC ; Z. V. MARINKOVIC ; G. O. BRANKOVIC ; E. FRIDANCEVSKA.** Evaluation of Kinetic Data for Crystallization of TiO2 prepared by Hydrolysis Method. *Jour. of Thermal Analysis and Calorimetry,* 2000, vol. 60, 595-604